# EUROPEAN PATENT APPLICATION

(11) **EP 2 950 201 A1**
(43) Date of publication of application: **02.12.2015**
(21) Application number: 14465511.5
(22) Date of filing: 28.05.2014
(51) Int. Cl.: G06F 7/58

(54) **Generation of random numbers from an unitialised memory unit**

(71) Applicant: Continental Automotive GmbH, 30165 Hannover (DE)
(72) Inventor: Tipa, George-Emilian, 300351 Timisoara (RO); Groza, Bogdan Ioan, 300236 Timisoara (RO); Ragobete, Radu, 300715 Timisoara (RO)

(57) **Abstract**

A method for generating a random number (450) comprises the steps of gathering (100) a multitude of binary values from a multitude of memory locations of an uninitialized memory unit, wherein a first binary value is gathered from a first memory location (125), wherein a second binary value is gathered from a second memory location (128), wherein the second memory location (128) is determined based on the first binary value and a predetermined random seed value. The multitude of binary values is output as a first random number (102) and the random number (450) is determined based on the first random number. Thus, the binary values are selected uniformly spread over the memory unit and may provide better quality randomness. Optionally, the method may combine multiple sources of entropy.

## Description

### Field of the invention

The invention relates to a method for generating random numbers in automotive devices, in particular on automotive embedded devices.

### Background

In the automotive sector, embedded devices are frequently employed in many security critical tasks, such as encryptions or authentications, which require high quality random numbers. Often, pseudo random number generators, PRNG, are used, which are not truly random, as the entire sequence is determined based on an initial value, the random seed or random seed value applied to an algorithm and they may be therefore predictable. Such a predictable behaviour of pseudo random number generators (PRNG - also known as a deterministic random bit generator) may lead to vulnerable system which can be misused by attackers.

Therefore, good quality randomness is mandatory for security critical tasks.

True random numbers may be generated by exploiting system characteristics that are hard or nearly impossible to predict, in contrast to pseudo random numbers which are generated via a PRNG. Several hard to predict properties of wide-spread hardware units are commonly employed in practice, for example the noise from Zener diodes collected by an analog to digital converter (ADC) or the measured drifts of two oscillators.

It was proved that the state of static random access memory (SRAM) after startup is a viable source for randomness, see D. Holcomb et al., Power-up sram state as an identifying fingerprint and source of true random numbers, Computers, IEEE Transactions on, 58(9):1198-1210, September 2009 and A. Van Herrewege et al., Secure prng seeding on commercial off-the-shelf microcontrollers, Proceedings of the 3rd international workshop on Trustworthy embedded devices, pages 55-64, ACM, 2013.

One limitation shown for this methodology was that it may not work reliable at low temperatures, e.g., -30° Celsius. Even if the environment temperature of an SRAM is not extremely low, an attacker may introduce such temperatures in the circuitry of the SRAM module to prevent good quality randomness and bypass underlying security mechanisms.

### Summary of the invention

It may be seen as an object of the invention to provide a method for generating a random number which overcomes the drawbacks of the prior art.

This object is solved by the features of the independent claim. Further embodiments of the invention are described in the dependent claims and the following description.

According to an aspect of the invention, a method for generating a random number is provided. The method comprises the steps of gathering a multitude of binary values from a multitude of memory locations of an uninitialized memory unit, wherein a first binary value is gathered from a first memory location and wherein a second binary value is gathered from a second memory location. The second memory location is determined based on the first binary value and a predetermined random seed value. The multitude of binary values is outputted as a first random number and the random number is determined based on the first random number.

The memory unit may in particular be a SRAM module. An SRAM module is in the uninitialized state immediately after being powered up, for example after turning on a device which contains a SRAM. The term uninitialized means that the content of the SRAM is undefined, i.e., the SRAM contains random values.

Usually, a memory unit is adapted for storing binary values and comprises a multitude of memory locations, wherein each memory location is adapted for storing one binary value, i.e., the logical values "0" or "1". The logical values are stored or written to the memory location for example by defining a state of a semiconductor element located in the SRAM module. As an SRAM module comprises a plurality of such semiconductor elements each having an undefined state after power on the SRAM (the SRAM is uninitialized), the corresponding logical values are used for gathering randomness. One of these semiconductor elements which correspond to one logical value stored in the memory unit corresponds to a memory location.

An uninitialized memory unit contains bits with hard to predict states when a device with a memory unit switches from a low-power state or power is applied for the first time. Due to uncontrollable manufacturing conditions, this memory cells or memory locations have a bi-stable behaviour and when power is applied they will tend to be either zero or one.

The generated random number has a predefined length and may in particular be a binary string.

The method enables selecting values randomly distributed over the memory module as the memory location of a subsequent value is chosen based on a random number and the value of the previous memory location, which is also a random value in an uninitialized state of the memory module.

As a result of this step, the memory locations used for gathering the multitude of binary values are randomly distributed over the address space of the memory module. Thus, even if there is a compromised section of the memory module (for example as result of applying low temperatures to the memory unit or the memory unit has already initialized areas), the binary values are selected from memory locations randomly distributed over the whole memory unit.

In other words, a pointer to the subsequent memory location or its address in the address space of the memory unit is calculated based on the random seed value and the value of the previous memory location.

One memory address or memory location of the memory unit may for example comprise one bit or one byte. Instead of reading a single bit in one step, the method may be carried out by reading two or more bits from memory locations adjoining each other in each step. When reading more than one bits of adjoining memory locations or memory locations with predefined distance to each other in one step, the number of read bits must particularly be smaller than the number of bits of the first random number. Otherwise, all bits of the first random number would be read in one step. This assures that more than one step is executed for gathering binary values from the memory.

It is one aspect that the position of a subsequent memory location cannot be determined before reading the value of a previous memory location. This makes the position of the subsequent memory location unpredictable even when compromising a section of the memory unit and thus enables gathering of true random numbers.

The multitude of binary values read from the multitude of memory locations of the memory unit represents a first random number. This first random number may in particular be a binary number being formed of a multitude of binary values (bits).

This method enables gathering sufficient entropy in a short amount of time and uses only a unit which exists in almost any electronic device, namely a memory unit and the states of the memory unit. Additional units may optionally be used, as described in more detail below.

In order to determine the second memory location or a pointer to the second memory location, any binary or logical operation can be applied to the value of the first memory location and the random seed value.

The method may in particular be carried out by an embedded automotive device within a vehicle for generating random numbers used for security critical tasks. The device may be a microcontroller. The method uses only hardware units of the device for generating the random numbers. No additional units are required.

The first random number may in particular be used as an input value of a one way function which outputs the random number.

According to an embodiment, the first memory location is determined based on the predetermined random seed value.

As the value of the first memory location is a random value, the position of the second memory location which is determined based on the value of the first memory location and the random seed value is located at a random position on the memory unit and unknown before gathering the value of the first memory location.

Alternatively, the first memory location may be a predefined memory location. As the position of the second memory location is determined based on two values (value of the first memory location and random seed value), the second memory location may be unpredictable even when one of these values (for example the value of the first memory location) is compromised.

According to a further embodiment, the predetermined random seed value is read from a non-volatile memory location.

The random seed value may in one embodiment not change or vary. Alternatively, the random seed value may be variable. In different devices, the random seed value may be different. Thus, an attack to one device may not be successful when attacking another device, which may additionally improve the security of the devices. The random seed value may for example be written to the non-volatile memory location at manufacturing time of a device.

According to a further embodiment, the first random number is concatenated with a second random number to obtain a third random number. In this embodiment, the generated random number is determined based on the third random number.

Concatenation of random numbers may in particular mean that the bit strings of the first and second random numbers are merged, for example by appending the bit string of the second random number to the bit string of the first random number. Such an operation results in a third random number having the amount of bits corresponding to the sum of the bits of the first and second random numbers. The third random number is then used as the input value of a one way function for generating the random number for being used in a security critical task.

According to a further embodiment, the third random number is used as an input value of a one way function for obtaining the random number.

When generating the random number based on the third random number, the generated random number may in particular have fewer bits than the third random number or in general than the input value of the one way function. Thus, the quality of randomness may be improved.

According to a further embodiment, the second random number contains a multitude of bit values of the output value of an analog to digital converter (ADC), which analog to digital converter uses a voltage value as an input value.

The ADC may in particular use a voltage value of a unit onboard a vehicle, for example of a reference channel like the battery voltage or other analogue inputs.

According to a further embodiment, the second random number contains concatenated single bits of a multitude of subsequent output values of the analog to digital converter, respectively.

In other words, the ADC may carry out subsequent multiple conversions of a varying analogue voltage. Each of the multiple conversions contributes with only one bit to the second random number. For example, the least significant bit (LSB) of each converted digital value may be used. The LSBs of subsequent conversion steps are then concatenated and represent the second random number.

The LSB is the bit which may gather measurement errors and may therefore vary even when the analogue voltage does not substantially vary. Therefore, the LSB may even change when the input pin of the ADC is connected to ground. In this case there may still be some entropy since each ADC unit may have a conversion error and the LSB of each conversion may fluctuate.

In one embodiment, the LSB from 128 consecutive conversions of the ADC are concatenated.

According to a further embodiment, the second random number contains a multitude of bit values of a timer value.

Therefore, a value which continuously increases during an operation time contributes to the second random number. As the requesting time or generation time of a random number is hardly predictable, this value adds additional quality to the second random number. Even though a timer as an isolated source of a random number may generally not be a good source of entropy since its value can be predicted under certain conditions, for example short after start-up of a device, a timer value is a good source in combination with other sources of entropy. However, after sufficient operational time a timer value would also be hard to predict as well.

According to a further embodiment, the second random number contains a multitude of bit values of a bus performance counter (BPC) value.

A BPC measures the number of write access to an on-chip bus on a microcontroller. The write access may in particular be all write access from a CPU and DMA bus masters to peripherals, registers, external bus and other sources.

According to a further embodiment, the second random number contains a multitude of bit values of a clock calibration unit (CCU) value.

A CCU provides possibilities to calibrate an internal RC oscillator, for example 100 kHz, with respect to an external oscillator, for example 4 MHz. The result of this calibration represents the number of periods of the external oscillator counted inside the period of the internal oscillator. As result a random value will be obtained, based on the fact that oscillator drifts are not predictable due to physical imperfections. Even though this source of randomness might be weak since oscillator drifts may be expected in order of only several parts per million, it may contribute to a good source of randomness in combination with one or more sources described above and hereinafter.

In one embodiment, the method as described above and hereinafter generates good quality random numbers by combining multiple sources of entropy, not only by taking one source into consideration. In a first stage, the method extracts bits from a memory unit which are uniformly and randomly distributed over the available address space of the memory unit in order to prevent extraction from corrupted areas of the memory unit. By combination of multiple sources of entropy in a second stage, the drawbacks of single sources may be eliminated and successful attacks to one of these sources do not substantially reduce the quality of randomness of the generated random number.

In one embodiment, the method described above and hereinafter combines multiple sources of entropy: SRAM state on return from a low power state, measurement errors on the last bit of an ADC, Clock Calibration, Timer, and Bus Performance Counter values. Mixing these values may overcome drawbacks or shortcomings of each individual of these sources: the ADC, the CC, the Timers, and the BPC may not yield enough entropy, while the entropy of the SRAM can be itself weakened by inducing extremely low temperatures in the circuit. In one stage of the method, locations from the SRAM are extracted that are uniformly and/or randomly distributed in order to prevent extraction from corrupted areas of the SRAM that have constant or predictable values due to software that is already located in memory. The multitude sources of entropy are mixed through one way functions based on existing hardware support for standard CRCs or basic cryptographic blocks (AES, SHA, for example).

Even though the method described above and hereinafter is based on gathering entropy from a SRAM in a first stage and concatenating a bit sequence with entropy gathered from one or a multitude of other physical sources in a second stage, it might also be possible to use the method steps of the second stage independent from the method steps of the first stage. In such a method, entropy is collected from at least one physical source and a gathered bit sequence may be used as an input value of an OWF for generating a random number. Before generating the random number, this input value may be concatenated with another bit sequence which is a predetermined bit sequence or a varying bit sequence.

These and other aspects of the present invention will become apparent from and elucidated with reference to the exemplary embodiments described hereinafter.

Exemplary embodiments of the present invention will now be described in the following, with reference to the following drawings.

### Brief description of the drawings

- Fig. 1: schematically illustrates a method according to an exemplary embodiment of the invention;
- Fig. 2: schematically illustrates an unit for carrying out the method according to an exemplary embodiment of the invention.
- Fig. 3A: schematically illustrates an unit for carrying out the method according to an exemplary embodiment of the invention.
- Fig. 3B: schematically illustrates an unit for a bit compression according to an exemplary embodiment of the invention.

### Detailed description of embodiments

The illustration in the accompanying drawings is schematically and not to scale. In different drawings, similar or identical elements or steps are provided with the same reference numerals.

The following detailed description is merely exemplary in nature and is not intended to limit the application and uses.

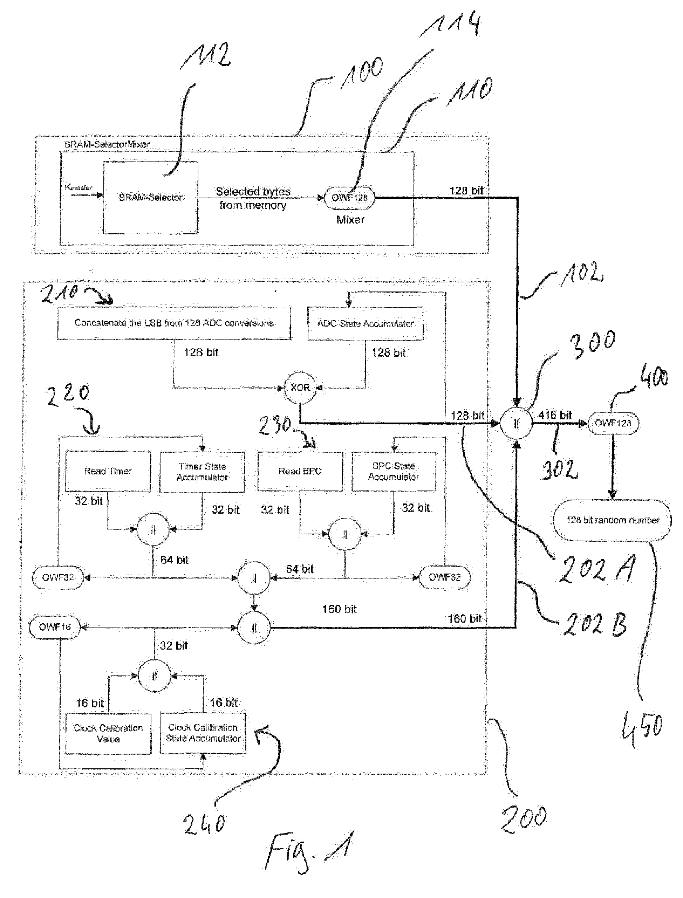

Fig. 1 illustrates the steps of a method for generating a random number 450. The method is based on two stages. In a start-up stage 100, entropy is collected out of an uninitialized SRAM. In this stage, an SRAM-SelectorMixer unit 110 with a selector 112 and a mixer 114 provide the first random number 102 having 128 bits.

The selector 112 is adapted for uniformly selecting memory locations in order to build a vector of predefined entropy, i.e., a bit sequence with a predefined number of bits.

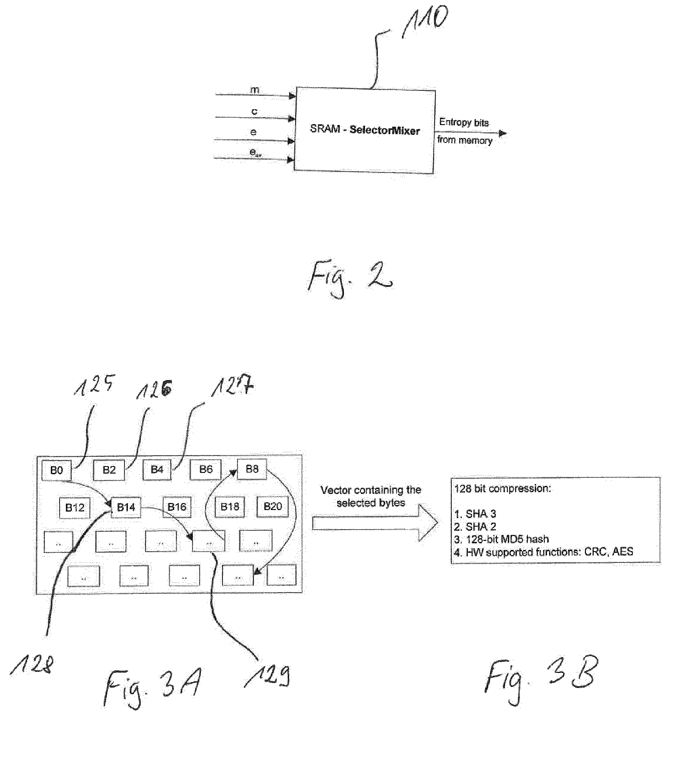

The mixer 114 receives the bit vector from the selector 112 as described in more detail in Fig. 3A and generates the first random number 102. The mixer 114 is a one way function as shown in Fig. 3B.

In case of a security critical task, entropy is collected whenever a random number is required. The entropy is collected in a request stage 200. The entropy is collected from an ADC 210, CCU 240, BPC 230 and timer 220. The entropy collected in the request stage forms the second random number or numbers 202A, 202B which are concatenated with the first random number 102 by the concatenation unit 300.

The bit sequence comprises a predefined number of bits, for example from the ADC 128 bits, from the timer and the BPC 64 bits, respectively, and from the CCU 32 bits.

Each of the bit sequences of the ADC, BPC, CCU, and timer may be used as an input value for a one way function and may be fed back to a respective accumulator unit for concatenating the output value of the accumulator unit with the output value of the ADC, BPC, CCU, and timer, respectively.

The concatenated bit sequences of the timer, BPC, and CCU comprises 160 bits.

The concatenated first random value 102 and second random values 202A, 202B result in the third random value 302 which comprises 416 bits.

A one way function 400 illustrated in Fig. 3B generates a 128 bit random number based on the 416 bits of the third random number 302.

The method shown in Fig. 1 represents a system that extracts entropy out of a memory unit and other physical units like ADC, BPC, CCU, and timer. These physical units may in particular be embedded in a microcontroller. Based on these input values it generates a random value 450. The entropy is uniformly distributed over the entire memory of the memory unit, and may not be limited to a specific area which may be a corrupted memory section. The entropy bits are selected by the selector 112 by walking randomly over the memory unit.

The SRAM SelectorMixer 110 is triggered whenever the device is powered up. In vehicles this occurs whenever the vehicle is started and the memory unit is powered up. In this state, the memory unit is in an uninitialized state. Consequently, the memory cells have undefined values after being powered up and before writing values to the memory unit.

Figs. 2, 3A, and 3B illustrate a block diagram of the SRAM SelectorMixer 110. In general, this functional unit jumps at random positions within the memory unit and selects memory bytes or bits to build up a bit vector that will be subsequently compressed to return the first random value 102.

The SRAM SelectorMixer 110 takes the following input values: total size of memory m in bytes, the size of the corrupted memory c in bytes, the target entropy e in bits and the average entropy of each byte eₐᵥ entropy in bits/byte. The total size of memory is used for determining the address space available for selecting bit values. The size of the corrupted memory c is used for determining a minimum distance between the read memory locations. In other words: if the selected bits are spread over a larger area of the memory unit than the expected corrupted area, the quality of randomness is increased.

The values c and eₐᵥ may be predetermined values. In particular, these values may be determined by experimental results in view of possible attack scenarios.

As indicated in Fig. 1, the selector 112 uses a master key Kₘₐₛₜₑᵣ with a random value that is given as seed to a one-way function that outputs a pointer to the next memory cell. The master key may be a non secret random value and the one way function may provide a 16 bit pointer to the next memory location. Of course the length of the pointer depends on the capacity of the memory unit, i.e., on the available address space.

The selection of the bits is described in Fig. 3A. Initially, a first binary value 125 is gathered from memory cell B0. Subsequently, a second binary value 128 is gathered from memory cell B14. The memory cell for gathering the second binary value 128 is determined based on the master key and the first binary value 125 from the memory cell B0. Therefore, depending on the first binary value 125, the second binary value may be gathered from any one of the other memory cells 126, 127, 129 of the memory unit. The arrows shown in Fig. 3a indicate the order of gathering the binary values from the memory unit.

The bit vector gathered from the memory unit is provided to a one way function shown in Fig. 3B. This one way function may be selected from SHA 3, SHA 2, 128-bit MD5 hash, or hardware supported functions like CRC or AES. Alternatively, any other one way function may be used.

## Claims

1. Method for generating a random number (450), comprising the steps of:
gathering (100) a multitude of binary values from a multitude of memory locations of an uninitialized memory unit;
wherein a first binary value is gathered from a first memory location (125);
wherein a second binary value is gathered from a second memory location (128);
wherein the second memory location (128) is determined based on the first binary value and a predetermined random seed value;
outputting the multitude of binary values as a first random number (102);
determining the random number (450) based on the first random number.

2. Method according to claim 1,
wherein the first memory location (125) is determined based on the predetermined random seed value.

3. Method according to claim 1 or 2,
wherein the predetermined random seed value is read from a non-volatile memory.

4. Method according to any one of the preceding claims,
wherein the first random number (102) is concatenated with a second random number (202A, 202B) to obtain a third random number (302);
wherein the random number (450) is determined based on the third random number (302).

5. Method according to claim 4,
wherein the third random number (302) is used as an input value of an one way function (400) for obtaining the random number (450).

6. Method according to claims 4 or 5,
wherein the second random number contains a multitude of bit values of the output value of an analog to digital converter, which analog to digital converter uses a voltage value as an input value.

7. Method according to claim 6,
wherein the second random number contains concatenated single bits of a multitude of subsequent output values of the analog to digital converter, respectively.

8. Method according to any one of claims 4 to 7,
wherein the second random number contains a multitude of bit values of a timer value (220).

9. Method according to any one of claims 4 to 8,
wherein the second random number contains a multitude of bit values of a bus performance counter value (230).

10. Method according to any one of claims 4 to 9,
wherein the second random number contains a multitude of bit values of a clock calibration unit value (240).
